# EUROPÄISCHE PATENTSCHRIFT

(11) **EP 3 287 555 B1**
(45) Veröffentlichungstag und Bekanntmachung des Hinweises auf die Patenterteilung: **13.11.2019**
(21) Anmeldenummer: 17185300.5
(22) Anmeldetag: 08.08.2017
(51) Int. Cl.: D04H 3/016, B32B 5/02, D04H 3/018, D04H 3/11

(54) **TECHNISCHES VERPACKUNGSMATERIAL**
TECHNICAL PACKAGING MATERIAL
MATÉRIEL TECHNIQUE D'EMBALLAGE

(30) Priorität: 25.08.2016 DE 102016010163
(43) Veröffentlichungstag der Anmeldung: 28.02.2018
(73) Patentinhaber: Carl Freudenberg KG, 69469 Weinheim (DE)
(72) Erfinder: GROTEN, Robert, 41844 Wegberg (DE)

(56) Entgegenhaltungen:
- DE-A1- 10 240 191
- DE-A1- 10 322 460
- DE-A1-102007 040 795
- DE-A1-102014 002 232

## Beschreibung

Die Erfindung betrifft die Verwendung eines Mikrofilamentflächengebildes als technisches Verpackungsmaterial. Die Erfindung betrifft auch ein technisches Verpackungsmaterial, das das Mikrofilamentflächengebilde enthält sowie ein Verfahren zur Herstellung des technischen Verpackungsmaterials.

### Stand der Technik

Bei Gegenständen, welche eine empfindliche Oberfläche, wie eine lackierte Außenfläche aufweisen, besteht die Gefahr, dass diese während eines Transports beschädigt wird. So müssen oberflächenempfindliche Bauteile in der Automobilherstellung von einer Arbeitsstation zur nächsten transportiert werden, was stets ein Risiko von Beschädigungen mit sich bringt.

Beispielsweise umfasst die Herstellung von Automobil-Stossfängern folgende Arbeitsstationen: In einer ersten Arbeitsstation wird die Metallstossstange gefertigt. Diese wird in einer zweiten Arbeitsstation mit einer Kunststoff-Oberfläche versehen. Der Verbund wird in einer oder mehreren Lackierstationen mit Farb-Lackierungen versehen und anschließend in einer weiteren Arbeitsstation transparent überlackiert. Bei jedem Übergang von einer Arbeitsstation zur nächsten muss sichergestellt werden, dass keine Beschädigung des Bauteils auftritt, da ansonsten die hochwertige Oberfläche erneut herzustellen ist. Bei einer größeren Beschädigung kann die hochwertige Oberfläche nicht mehr repariert werden. Entsprechend kann dann das Bauteil insgesamt nicht mehr weiterverwendet werden. Die aufgrund solcher Beschädigungen entstehenden Kosten sind erheblich.

Um die Gefahr von Beschädigungen zu verringern wurde versucht, auf den Oberflächen dieser Bauteile eine Klebefolie aufzubringen, die dann nach der Montage des Bauteils am zugehörigen Fahrzeug entfernt wird. Bei komplex gestalteten Bauteilen ist ein solches Anbringen und auch wieder Entfernen einer Klebefolie jedoch aufwendig, wenn nicht gänzlich unmöglich. Darüber hinaus ist eine solche Klebefolie gerade für Bauteile, die ein hohes Eigengewicht aufweisen, weitgehend ungeeignet. Bei einem Anschlagen solch schwerer Bauteile gegen ein Hindernis wird nämlich die in der Regel dünne Klebefolie durchstoßen.

Einen besseren Schutz bieten technische Verpackungsmaterialien, die zur Umhüllung der Bauteile beispielsweise als Montage- und Transportschutz eingesetzt werden und so die Gefahr einer Verschmutzung bzw. Beschädigung während der Fertigung verringern sollen. Das Verpackungsmaterial hat dabei im Wesentlichen zwei Anforderungen zu erfüllen, nämlich zum einen die Sicherstellung eines ausreichenden Schutzes gegenüber äußerer mechanischer Beanspruchung und zum anderen die Sicherstellung eines ausreichenden Schutzes hinsichtlich diverser Schmutzpartikel, wie z.B. Staub, ggf. Öl oder sonstiger Flüssigkeiten.

Technische Verpackungsmaterialien werden für die verschiedensten oberflächen-empfindlichen Gegenstände, wie lackierte Karosserieteile, lackierte Möbel (z.B. Klavierlack), Gemälde, Gläser, Glas-Linsen, verchromte oder anderweitig hochglanz-veredelte Behältnisse verwendet.

Technische Verpackungsmaterialien enthalten oftmals grobfasrige Gewebe. An diesen ist nachteilig, dass gebrochene Fasern zu Lackierfehlern führen können (s.u.). Die Gewebe basieren meistens auf Baumwoll-Polyester-Mischungen und sind in der Regel eingefärbt, um die Inhaltserkennung zu erleichtern sowie meist PVC-beschichtet. Vorteilhaft an der PVC-Beschichtung ist, dass sich diese gut abreinigen lässt (Hochdruckwasserstrahl). Allerdings erlaubt sie kein letztes Abdampfen der Lacklösungsmittel, was zu kreisrunden Flecken auf dem Stossfänger führen kann, ähnlich der Hinterlassenschaft eines Trinkglases auf einem Holztisch. Bei Verzicht auf die PVC-Beschichtung ist jedoch nachteilig, dass sich Verunreinigungen aus dem Produktionsprozess, (beispielsweise Metallkrümel aus der Stossstangen-Vorbereitung) in das Gewebe einnisten können, was zu Kratzern führt. Nicht zuletzt kann es durch Faserbruch des Transport-Textils zu Lackierfehlern kommen, was daher rührt, dass ein im Querschnitt mehr als 10 µm großer Partikel durch Überlackierung auf 40 µm anschwillt und dadurch zu einem sichtbaren Fehler führt. Die Rücklaufquote in o.g. Prozess lackierter Stoßfänger, die in der Lackiererei überarbeitet werden müssen, liegt im Schnitt bei 30%.

Weitere bekannte technische Verpackungen sind Poly-Olefin-basierte Vliesstoffe, hergestellt über das Flashspun-Verfahren. Diese Vliesstoffe weisen herstellungsbedingt Fasern mit einer Länge von wenigen Zentimetern auf und erfüllen im Prinzip alle Anforderungen für Kratzer- und Anschmutzungs-Schutz und können durch eine oberflächenspannungserhöhende Behandlung (Plasma, Corona etc.) bedruckbar gemacht werden. Nachteilig an diesen Vliesstoffen ist jedoch, dass sie im Dauergebrauch einen deutlichen Verschleiß zeigen, was ihre Wiederverwendung begrenzt (meist Wegwerfartikel). Desweiteren sind ihnen im Hinblick auf mechanische Belastbarkeit und Abrieb-Resistenz Grenzen gesetzt. Schließlich ist nachteilig, dass Poly-Olefine, abgesehen von thermischem Recycling, nicht recycling-fähig sind.

Ebenfalls bekannt ist die Verwendung von Mikrofilament-Vliesstoffen mit einem mittleren Titer von 0,2 dtex bis 2 dtex als technische Verpackungen. Diese Vliesstoffe zeigen sich schonend zu kratzempfindlichen Oberflächen, müssen jedoch meist nach einigen Gebrauchszyklen entsorgt werden, weil sie nicht genügend pilling- und abrasionsresistent sind (z.B. Faserbruch bei Ein- und Ausschüben von schwerem Transportgut wie Autotüren).

DE 103 22 460 A1 beschreibt ein Verfahren und eine Vorrichtung zur Herstellung eines Spinnvlieses aus thermoplastischem Material, wobei die aus aufgeplatzten Fasern entstehenden Filamente zusätzlich temperiert und/oder verstreckt werden und unterschiedliche Durchmesser und unterschiedliche Faserlängen aufweisen.

DE 102 40 191 A1 beschreibt ein Spinnvlies aus thermoplastischem Material, das einen Filamentdurchmesser von unterhalb 1,0 µm aufweist. Die Filamente entstehen aus aufgeplatzten Fasern, wobei die Filamente eine Länge von mindestens fünf Zentimetern aufweisen und miteinander an diskreten Stellen verbunden sind.

DE 10 2014 002232 A1 beschreibt einen Mikrofaser-Verbundvliesstoff, umfassend eine erste und eine zweite Faserkomponente, die in Form alternierender Lagen angeordnet sind, wobei
- mindestens eine erste Lage A die erste Faserkomponente in Form schmelzgesponnener und zu einem Vlies abgelegter Verbundfilamente umfasst, die zumindest teilweise zu Elementar-Filamenten mit einem mittleren Titer von weniger als 0,1 dtex, vorzugsweise zwischen 0,03 dtex und 0,06 dtex gesplittet und verfestigt sind,
- mindestens eine Lage B auf der ersten Lage A angeordnet ist, wobei die Lage B die zweite Faserkomponente in Form von zu einem Vlies abgelegten und verfestigten Fasern mit einem mittleren Titer von 0,1 bis 3 dtex umfasst,
- mindestens eine zweite Lage A auf der Lage B angeordnet ist.

### Offenbarung der Erfindung

Der Erfindung liegt die Aufgabe zugrunde, ein technisches Verpackungsmaterial, insbesondere zum Montage- und Transportschutz, bereitzustellen, das die vorgenannten Nachteile zumindest teilweise ausräumt. Insbesondere soll das Verpackungsmaterial einen ausreichenden Schutz gegenüber äußerer mechanischer Beanspruchung und gleichzeitig gute Dauergebrauchseigenschaften, insbesondere eine hohe Abrasions- und Pillingresistenz zeigen, so dass es umweltschützend und weniger reinvestitionsintensiv mehrfach verwendet werden kann.

Diese Aufgabe wird gelöst durch die Verwendung eines Mikrofilamentflächengebildes umfassend mindestens eine Lage A, die
schmelzgesponnene und zu einem Vlies abgelegte Verbundfilamente umfasst, die einen Querschnitt mit einer Pie oder Hollow-Pie Struktur aufweisen, und die mittels Fluidstrahlen, insbesondere Wasserstrahlen, zumindest teilweise zu Elementar-Filamenten mit einem mittleren Titer von weniger als 0,15 dtex, vorzugsweise weniger als 0,1 dtex, noch bevorzugter von 0,03 dtex bis 0,06 dtex, gesplittet und verfestigt sind,
als Oberflächenlage in einem technischen Verpackungsmaterial.

Überraschend wurde erfindungsgemäß gefunden, dass das erfindungsgemäß verwendete, hochfeine Elementar-Filamente enthaltende, Mikrofilamentflächengebilde sich hervorragend als Oberflächenlage in einem technischen Verpackungsmaterial eignet und dabei einen sehr guten Schutz gegenüber Oberflächenbeanspruchung, wie Pilling und Abrasion zeigt. Dabei ist die Lage A zweckmäßigerweise dem zu verpackenden Gegenstand zugewandt und/oder berührt diesen.

Dass das Mikrofilamentflächengebilde als Oberflächenlage in einem technischen Verpackungsmaterial eingesetzt werden kann, war insofern überraschend, als zu erwarten war, dass die im Mikrofilamentflächengebilde verwendeten hochfeinen Elementar-Filamente zu sehr schlechten Abrasionseigenschaften führen. Unter Abrasion wird dabei das Abtragen von Material verstanden, wodurch die beschliffene Ware an der beschliffenen Stelle durch Abtransport von Schleifstaub immer dünner wird, bis hin zur Lochbildung. Die Lochbildung bedeutet ein absolutes Maß und kann daher zur Ermittlung der Abrasionsresistenz herangezogen werden (ISO 12947-2 übernommen aus Martindale-Methode, BS 5690). Bisherige allgemeine Erfahrung war, dass, bei gegebenem Material, die Abrasionsresistenz mit dem Fasertiter fällt. Das ist auch naheliegend, wenn man sich vorstellt, dass eine Schleifung auf einem dicken Faden zunächst gerade mal eine Kerbung ergibt, während bei einem Faden mit einem geringeren Durchmesser dieselbe Kerbtiefe bereits zu einem Faserbruch führen kann.

Darüber hinaus wurde überraschenderweise gefunden, dass sich das Mikrofilamentflächengebilde auch durch hervorragende Pillingeigenschaften auszeichnet. Unter Pilling ist zu verstehen, dass eine Schlaufe in der Oberfläche der Flächenware von einer angrenzenden Oberfläche durch eine Oberflächenrauhigkeit eingehakt und der Faden mit der Zeit aus der Flächenwarenstruktur herausgezogen wird. Dies geschieht meist unter Bildung eines Knäuels, eines so genannten Pilling-Kügelchens. Besteht der Faden aus einem eher kristallinen oder brüchigen Material (z.B. Baumwolle), so kann das Pillingknäuel abbrechen und dadurch die Oberfläche, selbst nach anfänglichem Pilling-Erscheinungsbild, wieder intakter aussehen. Die zur Herstellung von Mikrofaservliesstoffen üblicherweise verwendeten Kunststoffe, beispielsweise Polyester- und Polyamid-Pilling-Kügelchen brechen dagegen nicht ab, wodurch sich die Knäuel vergrößern und sich der Oberflächenaspekt verschlechtert. Überraschend wurde jedoch erfindungsgemäß gefunden, dass durch die Verringerung des Fasertiters (bei Beibehaltung von Flächengewicht und Polymerzusammensetzung) verbesserte Pillingwerte erhalten werden können. So hat sich gezeigt, dass sich die Pillingresistenz von Polyethylentherephthalat/Polyamid 6 (PET/PA6), 70/30, PIE16, 0,2 dtex Filamente zu PET/PA6, 70/30, PIE32, 0,1dtex Filamenten ungefähr verdoppelt.

Ohne sich erfindungsgemäß auf einen Mechanismus festlegen zu wollen wird vermutet, dass die hervorragenden Pillingeigenschaften des Mikrofilamentflächengebildes daher rühren, dass die sehr feinen Elementar-Filamente aufgrund ihrer geringeren Biegesteifigkeit beim Splitt- und Verfestigungsschritt mittels Fluidstrahlvervestigung, insbesondere Wasserstrahlverfestigung, besonders gut miteinander verflochten werden können, wodurch sich die innere Reibung in dem Flächengebilde erhöht und die Pilling-Resistenz verbessert wird.

Unter einem technischen Verpackungsmaterial wird erfindungsgemäß ein Material verstanden, dass zur partiellen oder vollständigen Umhüllung eines Gegenstands insbesondere zu dessen Schutz, insbesondere zu dessen Montage- und Transportschutz, oder zur besseren Handhabung eingesetzt wird. Das Verpackungsmaterial soll dabei im Wesentlichen einen ausreichenden Schutz des Gegenstands gegenüber äußerer mechanischer Beanspruchung sowie gegenüber Schmutzpartikeln und/oder Flüssigkeiten gewährleisten.

In praktischen Versuchen wurde gefunden, dass eine weitere Verbesserung der Pilling- und Abrasionseigenschaften dadurch erzielt werden kann, dass das Mikrofilamentflächengebilde in sich höher verdichtet wird. Dies kann durch eine Erhöhung der in die Fläche hineingebrachten Energie beim Verfestigungsschritt erzielt werden.

Erfindungsgemäß weist die Lage A zumindest teilweise zu Elementar-Filamenten mit einem mittleren Titer von weniger als 0,15 dtex gesplittete Verbundfilamente auf. Diese können als eine Art Mikrofilamente angesehen werden und mithin ein Mikrofilamentflächengebilde bilden.

Unter dem Begriff Filamente werden erfindungsgemäß Fasern verstanden, die im Unterschied zu Stapelfasern eine theoretisch unbegrenzte Länge haben. Verbundfilamente bestehen aus mindestens zwei Elementar-Filamenten und können durch gebräuchliche Splittverfahren, wie Fluidstrahlvervestigung, in Elementarfilamente gespalten und verfestigt werden. Die Verbundfilamente der Lage A sind erfindungsgemäß zumindest zum Teil in Elementarfilamente gespalten. Dabei beträgt der Splittgrad vorteilhafter Weise mehr als 80 % noch bevorzugter mehr als 90 % und insbesondere etwa 100 %.

In einer bevorzugten Ausführungsform der Erfindung beträgt der Anteil der Elementarfilamente der Lage A von 80 Gew.% bis 100 Gew.%, vorzugsweise von 90 Gew.% bis 100 Gew.%, insbesondere etwa 100 Gew.%, jeweils bezogen auf das Gesamtgewicht der Lage A.

Im Falle eines Mikrofilament-Verbundflächengebildes beträgt der Anteil der Elementarfilamente der Lage A, bezogen auf das Gesamtgewicht des Mikrofilament-Verbundflächengebildes vorzugsweise mindestens 5 Gew.%, beispielsweise von 5 Gew.% bis 30 Gew.% und/oder von 5 Gew.% bis 25 Gew.%.

Erfindungsgemäß umfasst das Mikrofilamentflächengebilde mindestens eine Lage A als Oberflächenlage, wobei in einer einfachen Ausgestaltung der Erfindung das Mikrofilamentflächengebilde lediglich aus der Lage A besteht. Zur Eigenschaftsoptimierung kann es jedoch vorteilhaft sein die Lage A in ein mehrschichtiges Material (Verbundflächengebilde) zu integrieren. In diesem Fall ist es im Hinblick auf die Dauergebrauchseigenschaften (Pilling und Abrasion) von Vorteil, wenn mindestens eine äußere Lage des Mikrofilament-Verbundflächengebildes von der Lage A gebildet wird. Dabei ist ebenfalls vorteilhaft, wenn die Lage A dem zu verpackenden Gegenstand zugewandt ist und/oder diesen berührt.

Grundsätzlich ist denkbar, dass die Lage A neben den Elementarfilamenten noch weitere Fasern enthält, beispielsweise metallbedampfte Fasern. Diese Fasern sind vorteilhaft für eine gute elektrostatische Ableitung, bis hin zur elektrischen Leitfähigkeit. Besonders gute Gebrauchseigenschaften werden jedoch erhalten, wenn, wie oben erläutert, der Anteil an Elementarfilamenten in der Lage A mindestens 80 Gew.% beträgt.

Vorteilhaft an der Verwendung von Verbundfilamenten als Ausgangsmaterial zur Herstellung der Elementarfilamente ist, dass der Titer der aus ihnen erzeugten Elementarfilamente auf einfache Weise durch Variation der Anzahl der in den Verbundfilamenten enthaltenen Elementarfilamente eingestellt werden kann. Hierbei kann der Titer der Verbundfilamente konstant bleiben, was prozesstechnisch von Vorteil ist. Weiter vorteilhaft an der Verwendung der Verbundfilamente ist, dass zusätzlich durch Variation des Splittgrads der Verbundfilamente auf einfache Weise das Verhältnis an dickeren und dünneren Filamenten im Mikrofilament-Verbundflächengebilde gesteuert werden kann.

Praktische Versuche haben gezeigt, dass Mikrofilamentflächengebilde mit einer besonders hohen Abrasionsfestigkeit in Kombination mit guten Gebrauchseigenschaften erhalten werden können, wenn der mittlere Titer der Elementarfilamente der Lage A von 0,01 bis 0,15 dtex, vorzugsweise von 0,01 bis 0,1 dtex, insbesondere von 0,03 dtex bis 0,06 dtex beträgt. Elementarfilamente mit diesem Titer können beispielsweise erhalten werden durch Splitten von Verbundfilamenten mit einem Titer von 1 bis 6,4 dtex, vorzugsweise von 1,2 bis 3,8 dtex.

Die Elementarfilamente können dabei im Querschnitt kreissegmentförmig, n-eckig, oder multilobal ausgebildet sein.

Gemäss der Erfindung ist das Mikrofilamentflächengebilde eines, bei dem die Verbundfilamente einen Querschnitt mit Orangenspalten-artiger oder auch "Pie" genannter Multisegment-Struktur aufweisen, wobei die Segmente verschiedene, alternierende, inkompatible Polymere, enthalten können. Ebenfalls erfindungsgemäss sind Hollow-Pie Strukturen, die auch einen asymmetrisch axial verlaufenden Hohlraum aufweisen können. Pie-Strukturen, insbesondere Hollow-Pie Strukturen, können besonders leicht gesplitteten werden.

Dabei weist die Pie-Anordnung vorteilhafterweise 2, 4, 8, 16, 24, 32, 48 oder 64 Segmente, besonders bevorzugt 16, 24, 32 oder 48 Segmente, auf.

Um eine leichte Splittbarkeit zu erhalten ist es vorteilhaft, wenn die Verbundfilamente mindestens zwei thermoplastische Polymere enthalten. Vorzugsweise umfassen die Verbundfilamente mindestens zwei inkompatible Polymere. Unter inkompatiblen Polymeren sind solche Polymere zu verstehen, die in Kombination nicht, nur bedingt bzw. schwer klebende Paarungen ergeben. Ein solches Verbundfilament weist eine gute Spaltbarkeit in Elementarfilamente auf und bewirkt ein günstiges Verhältnis von Festigkeit zu Flächengewicht. Nur bedingt bzw. schwer klebende Paarungen liegen dann vor, wenn die Splittung der diese Paarungen aufweisenden Verbundfilamente einfacher geht als bei einem Verbundfilament, das lediglich aus einem der eingesetzten Polymere besteht.

Als inkompatible Polymerpaare, werden vorzugsweise Polyolefine, Polyester, Polyamide und/oder Polyurethane in einer solchen Kombination eingesetzt, dass sich nicht, nur bedingt bzw. schwer klebende Paarungen ergeben.

Die verwendeten Polymerpaare werden besonders bevorzugt ausgewählt aus Polymerpaaren mit mindestens einem ersten Polyolefin, bevorzugt Polypropylen, und/oder mindestens einem Polyamid, bevorzugt Polyamid 6, einerseits und mindestens einem zweiten Polyolefin, bevorzugt Polypropylen oder mindestens einem Polyester, bevorzugt Polyethylenterepthalat andererseits.

Besonders bevorzugt werden Polymerpaare mit Polypropylen, wie Polypropylen/Polyethylen, Polypropylen/Polyamid 6, und/oder Polypropylen/Polyethylenterepthalat.

Ebenfalls besonders bevorzugt werden Polymerpaare mit mindestens einem Polyester, bevorzugt Polyethylenterephthalat und und/oder mindestens einem Polyamid, bevorzugt Polyamid 6.

Polymerpaare mit zumindest einem Polyamid und/oder mit zumindest einem Polyethylenterephthalat werden wegen deren bedingter Klebbarkeit bevorzugt und Polymerpaare mit zumindest einem Polyolefin werden wegen deren schwerer Klebbarkeit besonders bevorzugt verwendet.

Als besonders bevorzugte Komponenten haben sich Polyester, vorzugsweise Polyethylenterephthalat, Polymilchsäure und/oder Polybutylenterephthalat einerseits, Polyamid, vorzugsweise Polyamid 6, Polyamid 66, Polyamid 46, andererseits ggf. in Kombination mit einem oder mehreren weiteren zu den oben genannten Komponenten inkompatiblen Polymeren, vorzugsweise ausgewählt aus Polyolefinen als besonders zweckmäßig erwiesen. Diese Kombination weist eine hervorragende Spaltbarkeit auf. Ganz besonders bevorzugt ist die Kombination aus Polyethylenterephthalat und Polyamid 6 oder aus Polyethylenterephthalat und Polyamid 66.

Möglichkeiten zur Herstellung von Mikrofilamentlagen aus gesplitteten Verbundfilamenten sind dem Fachmann bekannt und beispielsweise in den Druckschriften EP 0814188 A1 und EP 1619283 A1 beschrieben.

Ebenfalls ist grundsätzlich denkbar, dass die Lage A oberflächenbehandelt wurde und/oder eine Beschichtung, beispielsweise eine PVC-Beschichtung aufweist. In einer bevorzugten Ausführungsform der Erfindung weist die Lage A jedoch keine Beschichtung, insbesondere keine PVC-Beschichtung auf. An dieser Ausführungsform ist vorteilhaft, dass das Ausdampfen von Gasen und Dämpfen aus verpackten Gegenständen nicht behindert wird.

Das Flächengewicht der Lage A kann in Abhängigkeit von den eingesetzten Materialien und den erwünschten Eigenschaften des Verpackungsmaterials variieren. In der Regel haben sich Flächengewichte im Bereich von 5 g/m² bis 150 g/m², vorzugsweise von 10 g/m² bis 100 g/m², noch bevorzugter von 10 g/m² bis 50 g/m², als günstig erwiesen.

Die Dicke der Lage A kann in Abhängigkeit von den eingesetzten Materialien und den erwünschten Eigenschaften des Verpackungsmaterials ebenfalls variieren. In der Regel haben sich Dicken von mindestens 0,1 mm, beispielsweise von 0,1 mm bis 1 mm, bevorzugt von 0,2 mm bis 0,8 mm und insbesondere von 0,3 mm bis 0,5 mm als günstig erwiesen.

Erfindungsgemäß bevorzugt weist das Mikrofilamentflächengebilde zumindest auf derjenigen Seite, die dem zu verpackenden Gegenstand zugewandt ist, ein Pilling, gemessen nach DIN 53867 einer Note von mindestens 4, vorzugsweise von mehr als 4,5 auf.

Ebenfalls bevorzugt weist das Mikrofilamentflächengebilde zumindest auf derjenigen Seite, die dem zu verpackenden Gegenstand zugewandt ist, einen Abrieb Martindale (9kPa), gemessen nach EN 12947 von mindestens 35.000 Touren, vorzugsweise von mehr als 40.000 Touren auf.

In einer besonders bevorzugten Ausführungsform der Erfindung wird das Mikrofilamentflächengebilde als Montage- und/oder Transportschutz, insbesondere für oberflächen-empfindliche Gegenstände, wie lackierte Karosserieteile, lackierte Möbel, Gemälde, Gläser, Glas-Linsen, verchromte oder anderweitig hochglanz-veredelte Behältnisse verwendet.

In einer weiteren besonders bevorzugten Ausführungsform der Erfindung wird das Mikrofilamentflächengebilde als Transportschutz für nachdampfende Transportgüter, beispielsweise lackierte Bauteile oder Lebensmittel wie Brot oder Gemüse verwendet. Hierbei kann durch die erfindungsgemäße Konstruktion Atmungsaktivität oder sonstiger Gas- oder Dampf- Austausch, sowie gleichzeitiger Staubschutz bis hin zu Schutz vor Pollen oder anderen Allergenen erreicht werden.

Das Mikrofilamentflächengebilde kann die verschiedensten für den jeweiligen Anwendungszweck günstigen Ausgestaltungen aufweisen. So kann das Mikrofilamentflächengebilde als Blattmaterial, beispielsweise als Zwischenlage für stapelbare Güter, verwendet werden. In einer bevorzugten Ausführungsform ist das Verpackungsmaterial als Hülle und/oder Tasche ausgebildet. Dabei ist die Hülle und/oder Tasche zweckmäßigerweise an die Form und Dimension der zu verpackenden Gegenstände angepasst. Hierdurch kann das Verpackungsmaterial besonders gut an den Gegenständen fixiert und diesen gleichzeitig eine kratzsichere Stapelbarkeit verliehen werden.

In einer besonders bevorzugten Ausführungsform der Erfindung weist die Hülle und/oder Tasche Trageschlaufen und/oder Ösen zur Aufnahme von Tragestangen auf, was insbesondere für den Einsatz als hängender Transportschutz vorteilhaft ist.

Für die erfindungsgemäße Verwendung als Verpackungsmaterial kann das Mikrofilamentflächengebilde als solches eingesetzt werden. Ebenfalls denkbar ist jedoch, dass auf derjenigen Seite der Lage A, die dem zu verpackenden Material abgewandt ist, noch mindestens eine weitere Lage angeordnet ist, wodurch ein erfindungsgemäß verwendetes Mikrofilament-Verbundflächengebilde gebildet wird.

In einer bevorzugten Ausführungsform der Erfindung umfasst das Mikrofilament-Verbundflächengebilde neben der Lage A mindestens eine Lage B, vorzugsweise eine Lage B, die eine Schlag-/ Stoß- Dämpfungswirkung aufweist. An dieser Ausführungsform ist vorteilhaft, dass durch die zusätzliche Dämpfungslage Beschädigungen der verpackten Materialien besonders gut vermieden werden können. Ferner kann die Lage B eine elektrostatische Ableitungswirkung, eine vibrationsdämpfende Wirkung und/oder eine hohe Festigkeit aufweisen.

In einer besonders bevorzugten Ausführungsform der Erfindung zeigt die Lage B eine derartige Festigkeit, dass das Mikrofilament-Verbundflächengebilde eine Höchstzugkraft, gemessen nach DIN EN 13934-1 von mehr als 400 N/5cm, beispielsweise von 400 N/5cm bis 3000 N/5cm, bevorzugter von 600 N/5cm bis 3000 N/5cmN/5cm und insbesondere von 700 N/5cm bis 3000 N/5cm N/5cm aufweist. Hieran ist vorteilhaft, dass mit dem Verpackungsmaterial auch schwerere Materialien verpackt und transportiert werden können.

Zur Kombination von Lage A mit Lage B stehen dem Fachmann verschiedene Möglichkeiten zur Verfügung. Beispielsweise kann die Lage B im Prozess inline verarbeitet werden. In dieser Ausführungsform kann beispielsweise die Lage A nach dem Spinnen und Verstrecken direkt auf die Lage B abgelegt werden. Anschließend kann sie gemeinsam mit Lage A die weiteren Verfahrensschritte durchlaufen. Alternativ können die Lagen A und B erst unmittelbar vor einer Wasserstrahlverfestigung und/oder Splittung zusammengebracht werden, und diese gemeinsam durchlaufen. Diese Ausführungsformen sind insbesondere dann zweckmäßig, wenn Lage B eine, vorzugsweise abrollbare, Flächenware darstellt, die eine Luftdurchlässigkeit von > 80 l/m²s bei 100 Pa, gemessen nach ISO 9237, aufweist und vorzugsweise bei hohen Wasserstrahlverfestigungsdrücken nicht zerstört wird und sich auch nicht in Wasser auflöst. Ebenfalls denkbar ist die Lage A mit der Lage B erst nach einem Fluidstrahlverfestigungsschritt zu kombinieren. Hierzu können üblicher Verbundtechniken, beispielsweise Nähen, Verkleben, Verschweißen eingesetzt werden.

Das Mikrofilament-Verbundflächengebilde kann neben der Lage A und B auch weitere Lagen, beispielsweise weitere Lagen A und/oder B oder auch andere Lagen (C) aufweisen. So kann das Verpackungsmaterial beispielsweise die Lagenfolge ABA aufweisen.

Um Wiederholungen zu vermeiden wird zur Erläuterung besonders bevorzugter Ausgestaltungen des erfindungsgemäß verwendeten Mikrofilamentflächengebildes und/oder Mikrofilament-Verbundflächengebildes, und insbesondere zur Erläuterung besonders bevorzugte Ausgestaltungen der Lagen A und B ergänzend auf die im Folgenden in Bezug auf das erfindungsgemäß beanspruchte technische Verpackungsmaterial erläuterten Ausgestaltungen Bezug genommen.

Die vorliegende Erfindung betrifft des Weiteren ein als Hülle und/oder Tasche ausgebildetes technisches Verpackungsmaterial, umfassend ein Mikrofilament-Verbundflächengebilde, welches
- mindestens einer Oberflächenlage A aufweist, die schmelzgesponnene und zu einem Vlies abgelegte Verbundfilamente umfasst, die einen Querschnitt mit einer Pie oder Hollow-Pie Struktur aufweisen und die mittels Fluidstrahlen, insbesondere Wasserstrahlen, zumindest teilweise zu Elementar-Filamenten mit einem mittleren Titer von weniger als 0,15 dtex vorzugsweise von weniger als 0,1 dtex, noch bevorzugter von 0,03 dtex bis 0,06 dtex gesplittet und verfestigt sind, sowie
- mindestens eine Lage B, die eine derartige Festigkeit zeigt, dass das Mikrofilament-Verbundflächengebilde eine Höchstzugkraft, gemessen nach DIN EN 13934-1 von mehr als 400 N/5cm aufweist.

Um Wiederholungen zu vermeiden, wird zur Erläuterung besonders bevorzugter Ausgestaltungen des Mikrofilament-Verbundflächengebildes und insbesondere in zur Erläuterung besonders bevorzugte Ausgestaltungen der Lagen A und B ergänzend auf die oben in Bezug auf die erfindungsgemäß beanspruchte Verwendung beschriebenen Ausgestaltungen Bezug genommen.

Das erfindungsgemäße technische Verpackungsmaterial weist mindestens eine Lage B auf, die eine derartige Festigkeit zeigt, dass das Mikrofilament-Verbundflächengebilde eine Höchstzugkraft, gemessen nach DIN EN 13934-1 von mehr als 400 N/5cm aufweist. Wie oben erläutert ist hieran vorteilhaft, dass mit dem Verpackungsmaterial auch schwerere Materialien verpackt und transportiert werden können.

In einer besonders bevorzugten Ausführungsform der Erfindung zeigt die Lage B eine derartige Festigkeit, dass das Mikrofilament-Verbundflächengebilde eine Höchstzugkraft, gemessen nach DIN EN 13934-1 von 400 N/5cm bis 3000 N/5cm, bevorzugter von 600 N/5cm bis 3000 N/5cm und insbesondere von 700 N/5cm bis 3000 N/5cm N/5cm aufweist.

In praktischen Versuchen hat es sich als günstig erwiesen, wenn die Schicht B eines oder mehrere der folgenden Produkte enthält und/oder aus diesen besteht: Offenporige und vorzugsweise viskoelastische Schäume, perforierte Filme, netzartige textile Flächengebilde, Vliesstoffe, Gewebe, Gewirke, Gestricke und/oder Abstandsgewirke. Diese Produkte können aus den verschiedensten Materialien bestehen, sofern die Lage B eine wie oben beschriebene Festigkeit zeigt.

Das Flächengewicht des erfindungsgemäßen Mikrofilament-Verbundflächengebildes kann in Abhängigkeit von den spezifischen Einsatzbereichen variieren. Als für viele Fälle günstig hat es sich erwiesen das Flächengewicht des Mikrofilament-Verbundflächengebildes auf Werte von 80 g/m² bis 280 g/m², vorzugsweise von 100 g/m² bis 250 g/m, und insbesondere von 100 g/m² bis 250 g/m einzustellen.

Das erfindungsgemäße Mikrofilament-Verbundflächengebilde kann neben der Lage A und B auch weitere Lagen, beispielsweise weitere Lagen A und/oder B oder auch andere Lagen (C) aufweisen. So kann das Verpackungsmaterial beispielsweise die Lagenfolge ABA aufweisen. Bei dieser Ausgestaltung zeigen beide Oberflächen des Verpackungsmaterials die oben in Bezug auf Lage A diskutierten vorteilhaften Eigenschaften. Hierdurch ist eine einfache, materialsparende und kostengünstige Konfektionierung möglich, die dennoch einen optimalen Schutz des zu verpackten Materials gewährleistet.

Als weitere Lagen sind beispielsweise folgende Lagen C denkbar: Elektrisch leitende, u./o. elastische u.o. vorimprägnierte u./o. heißluftschrumpffähige, luftdurchlässige Flächengebilde.

Wie oben erläutert, zeichnet sich das Mikrofilament-Verbundflächengebilde durch hervorragende mechanische Eigenschaften, wie eine hohe Haltbarkeit und gute Abrasionsresistenz gepaart mit einem guten Schutz sensibler Oberflächen aus.

Vorteilhafterweise ist das Mikrofilament-Verbundflächengebilde ferner gekennzeichnet durch eine einfach einstellbare Weiterreißkraft gemäß DIN EN ISO 155797.

Die Dicke des Mikrofilament-Verbundflächengebildes kann in Abhängigkeit von den eingesetzten Materialien und den erwünschten Eigenschaften des technischen Verpackungsmaterials ebenfalls variieren. In der Regel haben sich Dicken im Bereich von mehr als 0,3 mm, beispielsweise von 0,3 mm bis 20 mm, vorzugsweise von 1 bis 5 mm, noch bevorzugter von 2 bis 4 mm als günstig erwiesen.

Das erfindungsgemäße technische Verpackungsmaterial kann beispielsweise wie folgt hergestellt werden:
- Es wird mindestens eine Lage A bereitgestellt, die schmelzgesponnene und zu einem Vlies abgelegte Verbundfilamente, umfasst, die einen Querschnitt mit einer Pie oder Hollow-Pie Struktur aufweisen, und die mittels Fluidstrahlen, insbesondere Wasserstrahlen, zumindest teilweise zu Elementar-Filamenten mit einem mittleren Titer von weniger als 0,15 dtex, vorzugsweise weniger als 0,1 dtex, noch bevorzugter von 0,03 dtex bis 0,06 dtex gesplittet und verfestigt sind;
- es wird mindestens eine Lage B bereitgestellt, die eine derartige Festigkeit zeigt, dass das resultierende Mikrofilament-Verbundflächengebilde eine Höchstzugkraft, gemessen nach DIN EN 13934-1 von mehr als 700 N/5cm aufweist;
- die Lagen A und B, werden aufeinander angeordnet, wobei mindestens eine Oberflächenlage durch die Lage A gebildet wird;
- die Lagen A und B werden miteinander verbunden, wobei ein Mikrofilament-Verbundflächengebilde gebildet wird.

Als besonders einfach hat sich ein Verfahren erwiesen, bei dem die Lage(n) A und B separat hergestellt und durch bekannte Fügeverfahren, beispielsweise Wasserstrahlverfestigung und/oder Verkleben, miteinander verbunden werden.

Im Folgenden wird die Erfindung anhand mehrerer nicht beschränkender Beispiele näher erläutert:

### Beispiel 1: Herstellung eines erfindungsgemäß verwendbaren Mikrofilamentflächengebildes und eines Vergleichsflächengebildes

Im Folgenden wird exemplarisch die Herstellung von Vliesstoffen mit einer Bikomponenten-Spinnvliesanlage aus Bikomponentenfilamenten mit Kuchenformquerschnitt ("PIE") beschrieben.

Es wird ein erfindungsgemäss verwendbarer Vliesstoff mit 32 Einzelfilamenten ("PIE32") mit einem Flächengewicht von 240 g/m² in identischer Produktionsweise eines identischen Vliesstoffs, jedoch auf Basis PIE16, verglichen.

| Rohstoffe: | Anteile: |
|---|---|
| Polyester, | 70 |
| Polyamid 6, | 30 |

### Extruder:

| | |
|---|---|
| PET, Zonen 1-7 | 270 - 295°C |
| PA6, Zonen 1-7 | 260 - 275°C |

### Spinnpumpen:

| | |
|---|---|
| Gesamtdurchsatz | 1,3 g/L pro min |
| Polymerverhältnis | außen, splittbare Lagen: PET / PA6, 71 / 29 (Vol.%) |
| | mittig, 110g/m², un-splittbar:PET / PA6, >90 / <10 (Vol.) |

### Düsen:

| | |
|---|---|
| Düsenart | Referenz PIE16, Erfindungsgemäß PIE32 |
| Verstreckung | pneumatisch, 5000-5500 m/min |

### Legung:

Die Legung erfolgt auf ein Ablageband mit voreingestellter Geschwindigkeit, welche ein Flächengewicht von 240g/m² ergibt.

### Verfestigung:

Die Vorverfestigung erfolgt durch Vernadelung mit 35 Stichen/cm² und anschließender Kalandrierung mit Stahlwalzen glatt / glatt. Die Endverfestigung und das Splitten der splittbaren Filamente wird durch Wasserstrahlverfestigung durchgeführt mit 4 bis 6 alternierenden Passagen auf der Oberseite A und der Unterseite B des Vliesstoffs in der Reihenfolge ABAB(AB).

### Trocknung:

Der Vliesstoff wird bei 190°C mit einem zylindrischen Durchlufttrockner getrocknet und thermofixiert.

Die Produktionsgeschwindigkeit richtet sich nach dem angestrebten Flächengewicht.

Es werden zwei identische Vliesstoffe unter identischen Bedingungen hergestellt, die sich bzgl. Lage A nur durch die Verwendung von PIE 16 bzw. PIE 32 -Düsen unterscheiden.

### Beispiel 2: Vergleich verschiedener relevanter Parameter der in Beispiel 1 hergestellten Mikrofilamentflächengebilde

Mit geeigneten Messverfahren werden verschiedene für die erfindungsgemäße Verwendung als Verpackungsmaterial relevante Eigenschaften der in Beispiel 1 hergestellten Mikrofilamentflächengebilde untersucht. Den Prüfungen liegen folgende Normen in den am Anmeldetag gültigen Fassungen, soweit nicht anders angegeben, zugrunde:

| Eigenschaft | Einheit | Norm |
|---|---|---|
| Flächengewicht | g/m² | EN 965 |
| Dicke | mm | EN 964-1 |
| Höchstzugkraft | N/5cm | EN 13934-1 |
| Höchstzugdehnung | % | EN 13934-1 |
| Weiterreisskraft | N | EN 13937-2 |
| Pilling | Note | angelehnt an DIN 53867 |
| Abrieb Martindale (9kPa) | Touren | EN 12947 |

Es wurden die in der folgenden Tabelle dargestellten Parameter gefunden:

| PIE - Type | | | PIE16 | PIE32 |
|---|---|---|---|---|
| Flächengewicht | | (g/m²) | 237 | 239 |
| Dicke | | (mm) | 0,83 | 0,81 |
| Höchstzugfestigkeit | L | (N/5cm) | 770 | 745 |
| | Q | (N/5cm) | 880 | 863 |
| Höchstzugdehnung | L | (%) | 49 | 47,5 |
| | Q | (%) | 53 | 54 |
| Delaminierungsresistenz | L | N/5cm | 16 | 19 |
| Weiterreissfestigkeit | L | (N) | 40 | 38 |
| | Q | (N) | 44 | 41 |
| Pilling | | (oben / unten) | 3 / 3 | 4 / 4,5 |
| Abrasionsresistenz Martindale 9kPa | | Loch bei | 25000 | 45000 |

Aus der Tabelle zeigt sich, dass beim Übergang von PIE16 zu PIE32, d.h. mit abnehmendem Fasertiter folgende Veränderungen auftreten:
- Eine signifikante Erhöhung der Delaminierungsresistenz
- eine sehr starke Erhöhung der Abrasionsresistenz
- eine sehr starke Erhöhung der Pillingresistenz.

Diese Eigenschaftsveränderungen demonstrieren, dass das erfindungsgemäße hochfeine Mikrofilamente enthaltende Mikrofilamentflächengebilde sich hervorragend als technisches Verpackungsmaterial eignet und gleichzeitig einen sehr guten Schutz gegenüber äußerer mechanischer Beanspruchung bietet sowie eine sehr gute Abrasionsresistenz zeigt.

## Patentansprüche

1. Verwendung eines Mikrofilamentflächengebildes umfassend mindestens eine Lage A, die schmelzgesponnene und zu einem Vlies abgelegte Verbundfilamente umfasst, die einen Querschnitt mit einer Pie oder Hollow-Pie Struktur aufweisen und die mittels Fluidstrahlen, insbesondere Wasserstrahlen, zumindest teilweise zu Elementar-Filamenten mit einem mittleren Titer von weniger als 0,15 dtex gesplittet und verfestigt sind, als Oberflächenlage in einem technischen Verpackungsmaterial.

2. Verwendung nach Anspruch 1, **dadurch gekennzeichnet, dass** der Anteil der Mikrofilamente und/oder Elementarfilamente der Lage A von 80 Gew.% bis 100 Gew.% bezogen auf das Gesamtgewicht der Lage A beträgt.

3. Verwendung nach Anspruch 1 oder 2, **dadurch gekennzeichnet, dass** die Lage A auf derjenigen Seite, die dem zu verpackenden Material zugewandt ist, keine Beschichtung, insbesondere keine PVC-Beschichtung aufweist.

4. Verwendung nach einem oder mehreren der vorgenannten Ansprüche, **dadurch gekennzeichnet, dass** die Lage A eine Dicke von 0,1 mm bis 1 mm aufweist.

5. Verwendung nach einem oder mehreren der vorgenannten Ansprüche, **dadurch gekennzeichnet, dass** das Mikrofilamentflächengebilde ein Pilling, gemessen nach DIN 53867, aufweist, das zumindest auf derjenigen Seite, die dem zu verpackenden Material zugewandt ist, einer Note von mindestens 4 entspricht.

6. Verwendung nach einem oder mehreren der vorgenannten Ansprüche, **dadurch gekennzeichnet, dass** das Mikrofilamentflächengebilde als Montage- und/oder Transportschutz, insbesondere für oberflächen-empfindliche Gegenstände, wie lackierte Karosserieteile, lackierte Möbel, Gemälde, Gläser, Glas-Linsen, verchromte oder anderweitig hochglanz-veredelte Behältnisse und/oder als Transportschutz für nachdampfende Transportgüter verwendet wird.

7. Verwendung nach einem oder mehreren der vorgenannten Ansprüche, **dadurch gekennzeichnet, dass** das Mikrofilamentflächengebilde in Form eines Blattmaterials, einer Hülle und/oder Tasche ausgebildet verwendet wird.

8. Verwendung nach einem oder mehreren der vorgenannten Ansprüche, **dadurch gekennzeichnet, dass** das Mikrofilamentflächengebilde als Mikrofilament-Verbundflächengebilde ausgebildet ist, das auf derjenigen Seite der Lage A, die dem zu verpackenden Gegenstand abgewandt ist, noch mindestens eine weitere Lage aufweist.

9. Verwendung nach Anspruch 8, **dadurch gekennzeichnet, dass** in dem Mikrofilament-Verbundflächengebilde die Lage A dem zu verpackenden Gegenstand zugewandt ist und/oder diesen berührt.

10. Verwendung nach Anspruch 8 oder 9, **dadurch gekennzeichnet, dass** das Mikrofilament-Verbundflächengebilde mindestens eine Lage B enthält, die eine derartige Festigkeit zeigt, dass das Mikrofilament-Verbundflächengebilde eine Höchstzugkraft, gemessen nach DIN EN 13934-1 von mehr als 400 N/5cm aufweist.

11. Verwendung nach einem oder mehreren der Ansprüche 8 bis 10, **dadurch gekennzeichnet, dass** der Anteil der Mikrofilamente und/oder Elementarfilamente der Lage A, bezogen auf das Gesamtgewicht des Mikrofilament-Verbundflächengebildes mindestens 5 Gew.% beträgt.

12. Als Hülle und/oder Tasche ausgebildetes technisches Verpackungsmaterial, umfassend ein Mikrofilament-Verbundflächengebilde, welches
- mindestens einer Oberflächenlage A aufweist, die schmelzgesponnene und zu einem Vlies abgelegte Verbundfilamente aufweist, die einen Querschnitt mit einer Pie oder Hollow-PieStruktur aufweisen und die mittels Fluidstrahlen, insbesondere Wasserstrahlen, zumindest teilweise zu Elementar-Filamenten mit einem mittleren Titer von weniger als 0,15 dtex gesplittet und verfestigt sind, sowie
- mindestens eine Lage B, die eine derartige Festigkeit zeigt, dass das Mikrofilament-Verbundflächengebilde eine Höchstzugkraft, gemessen nach DIN EN 13934-1 von mehr als 400 N/5cm aufweist.

13. Technisches Verpackungsmaterial, nach Anspruch 12, **dadurch gekennzeichnet, dass** die Lage A wie in einem der Ansprüche 1 bis 11 beschrieben, ausgebildet ist.

14. Herstellung eines technischen Verpackungsmaterials nach Anspruch 12 oder 13 umfassend folgende Schritte:
- Es wird mindestens eine Lage A bereitgestellt,
die schmelzgesponnene und zu einem Vlies abgelegte Verbundfilamente umfasst, die einen Querschnitt mit einer Pie oder Hollow-Pie Struktur aufweisen, und die mittels Fluidstrahlen, insbesondere Wasserstrahlen, zumindest teilweise zu Elementar-Filamenten mit einem mittleren Titer von weniger als 0,15 dtex gesplittet und verfestigt sind;
- es wird mindestens eine Lage B, die eine derartige Festigkeit zeigt, dass das Mikrofilament-Verbundflächengebilde eine Höchstzugkraft, gemessen nach DIN EN 13934-1 von mehr als 400 N/5cm aufweist, bereitgestellt;
- die Lagen A und B werden aufeinander angeordnet, wobei mindestens eine Oberflächenlage durch die Faserlage A gebildet wird;
- die Lagen A und B werden miteinander verbunden, wobei ein Mikrofilament-Verbundflächengebilde gebildet wird.

## Claims

1. Use of a micro-filament planar structure comprising at least one tier A which comprises melt-spun composite filaments which are laid so as to form a non-woven fabric and which have a cross section having a pie or a hollow-pie structure and which, by means of fluid jets, in particular water jets, are at least in part split and consolidated so as to form elementary filaments having a mean yarn count of less than 0.15 dtex, as a surface tier in a technical packaging material.

2. Use according to Claim 1, **characterized in that** the proportion of the micro-filaments and/or elementary filaments of the tier A is from 80% by weight to 100% by weight in terms of the total weight of the tier A.

3. Use according to Claim 1 or 2, **characterized in that** the tier A on that side that faces the material to be packaged does not have a coating, in particular does not have a PVC coating.

4. Use according to one or a plurality of the preceding claims, **characterized in that** the tier A has a thickness of 0.1 mm to 1 mm.

5. Use according to one or a plurality of the preceding claims, **characterized in that** the micro-filament planar structure displays pilling, measured according to DIN 53867, said pilling at least on that side that faces the material to be packaged corresponding to a rating of at least 4.

6. Use according to one or a plurality of the preceding claims, **characterized in that** the micro-filament planar structure is used as an assembly protection and/or shipping protection, in particular for sensitive-surface items such as painted body parts, painted furniture, paintings, glasses, glass lenses, chrome-plated or otherwise high-gloss-finished containers, and/or as a shipping protection for post-evaporating shipping goods.

7. Use according to one or a plurality of the preceding claims, **characterized in that** the micro-filament planar structure is used so as to be configured in the form of a sheet material, an envelope, and/or a pouch.

8. Use according to one or a plurality of the preceding claims, **characterized in that** the micro-filament planar structure is configured as a micro-filament composite planar structure which on that side of the tier A that faces away from the item to be packaged has yet at least one further tier.

9. Use according to Claim 8, **characterized in that** in the micro-filament composite planar structure the tier A faces the item to be packaged and/or physically contacts the latter.

10. Use according to Claim 8 or 9, **characterized in that** the micro-filament composite planar structure includes at least one tier B which has a strength such that the micro-filament composite planar structure has a maximum tensile force of more than 400 N/5cm, measured according to DIN EN 13934-1.

11. Use according to one or a plurality of Claims 8 to 10, **characterized in that** the proportion of the micro-filaments and/or elementary filaments of the tier A is at least 5% by weight in terms of the total weight of the micro-filament composite planar structure.

12. Technical packaging material configured as an envelope and/or pouch, comprising a micro-filament composite planar structure which has
- at least one surface tier A which comprises melt-spun composite filaments which are laid so as to form a non-woven fabric and which have a cross section having a pie or a hollow-pie structure and which, by means of fluid jets, in particular water jets, are at least in part split and consolidated so as to form elementary filaments having a mean yarn count of less than 0.15 dtex, and
- at least one tier B which has a strength such that the micro-filament composite planar structure has a maximum tensile force of more than 400 N/5cm, measured according to DIN EN 13934-1.

13. Technical packaging material according to Claim 12, **characterized in that** the tier A is configured as described in one of Claims 1 to 11.

14. Production of a technical packaging material according to Claim 12 or 13, comprising the following steps:
- providing at least one tier A which comprises melt-spun composite filaments which are laid so as to form a non-woven fabric and which have a cross section having a pie or a hollow-pie structure and which, by means of fluid jets, in particular water jets, are at least in part split and consolidated so as to form elementary filaments having a mean yarn count of less than 0.15 dtex;
- providing at least one tier B which has a strength such that the micro-filament composite planar structure has a maximum tensile force of more than 400 N/5cm, measured according to DIN EN 13934-1;
- disposing the tiers A and B on top of one another, wherein at least one surface tier is formed by the fibre tier A;
- connecting the tiers A and B to one another, wherein a micro-filament composite planar structure is formed.

## Revendications

1. Utilisation d'un article plat en microfilaments comprenant au moins une couche A, qui comprend des filaments composites filés à chaud et déposés sous forme de non-tissé, qui présentent une section transversale avec une structure Pie ou Pie creuse et qui sont scindés et solidifiés au moyen de jets de fluide, en particulier de jets d'eau, au moins en partie en filaments élémentaires avec un titre moyen de moins de 0,15 dtex, comme couche de surface dans un matériau technique d'emballage.

2. Utilisation selon la revendication 1, **caractérisée en ce que** la part des microfilaments et/ou des filaments élémentaires de la couche A vaut de 80 % en poids à 100 % en poids, rapportée au poids total de la couche A.

3. Utilisation selon une revendication 1 ou 2, **caractérisée en ce que** la couche A ne présente aucun revêtement, en particulier aucun revêtement en PVC, sur le côté tourné vers le matériau à emballer.

4. Utilisation selon une ou plusieurs des revendications précédentes, **caractérisée en ce que** la couche A présente une épaisseur de 0,1 mm à 1 mm.

5. Utilisation selon une ou plusieurs des revendications précédentes, **caractérisée en ce que** l'article plat en microfilaments présente un boulochage, mesuré selon DIN 53867, qui correspond au moins sur le côté, qui est tourné vers le matériau à emballer, à une note d'au moins 4.

6. Utilisation selon une ou plusieurs des revendications précédentes, **caractérisée en ce que** l'article plat en microfilaments est utilisé comme protection de montage et/ou de transport, en particulier pour des objets à surface sensible, comme des pièces de carrosserie peintes, des meubles laqués, des tableaux, des verres, des lentilles de verre, des récipients chromés ou autrement traités à brillance élevée et/ou comme protection de transport pour des marchandises transportées dégageant des vapeurs.

7. Utilisation selon une ou plusieurs des revendications précédentes, **caractérisée en ce que** l'on utilise l'article plat en microfilaments réalisé sous la forme d'une feuille de matière, d'une enveloppe et/ou d'une poche.

8. Utilisation selon une ou plusieurs des revendications précédentes, **caractérisée en ce que** l'article plat en microfilaments est réalisé sous la forme d'un article plat composite en microfilaments, qui présente encore au moins une autre couche sur le côté de la couche A qui est opposé á l'objet à emballer.

9. Utilisation selon la revendication 8, **caractérisée en ce que** la couche A dans l'article plat composite en microfilaments est tournée vers l'objet à emballer et/ou le touche.

10. Utilisation selon une revendication 8 ou 9, **caractérisée en ce que** l'article plat composite en microfilaments contient au moins une couche B, qui présente une résistance telle que l'article plat composite en microfilaments présente une force de traction maximale, mesurée selon DIN EN 13934-1 de plus de 400 N/5 cm.

11. Utilisation selon une ou plusieurs des revendications 8 à 10, **caractérisée en ce que** la part des microfilaments et/ou des filaments élémentaires de la couche A, rapportée au poids total de l'article plat composite en microfilaments, vaut au moins 5 % en poids.

12. Matériau technique d'emballage réalisé sous forme d'enveloppe et/ou de poche, comprenant un article plat composite en microfilaments, qui
- présente au moins une couche de surface A, qui comprend des filaments composites filés à chaud et déposés sous forme de non-tissé, qui présentent une section transversale avec une structure Pie ou Pie creuse et qui sont scindés et solidifiés au moyen de jets de fluide, en particulier de jets d'eau, au moins en partie en filaments élémentaires avec un titre moyen de moins de 0,15 dtex, ainsi que
- au moins une couche B, qui présente une résistance telle que l'article plat composite en microfilaments présente une force de traction maximale, mesurée selon DIN EN 13934-1 de plus de 400 N/5 cm.

13. Matériau technique d'emballage selon la revendication 12, **caractérisé en ce que** la couche A est formée comme cela est décrit dans l'une quelconque des revendications 1 à 11.

14. Fabrication d'un matériau technique d'emballage selon une revendication 12 ou 13, comprenant les étapes suivantes:
- on prépare au moins une couche A, qui comprend des filaments composites filés à chaud et déposés sous forme de non-tissé, qui présentent une section transversale avec une structure Pie ou Pie creuse et qui sont scindés et solidifiés au moyen de jets de fluide, en particulier de jets d'eau, au moins en partie en filaments élémentaires avec un titre moyen de moins de 0,15 dtex;
- on prépare au moins une couche B, qui présente une résistance telle que l'article plat composite en microfilaments présente une force de traction maximale, mesurée selon DIN EN 13934-1 de plus de 400 N/5 cm;
- on dispose les couches A et B l'une sur l'autre, dans lequel au moins une couche de surface est formée par la couche de fibres A;
- on assemble les couches A et B l'une à l'autre, dans lequel on forme un article plat composite en microfilaments.
